# EUROPEAN PATENT SPECIFICATION

(11) **EP 3 859 274 B1**
(45) Date of publication and mention of the grant of the patent: **03.09.2025**
(21) Application number: 21153002.7
(22) Date of filing: 22.01.2021
(51) Int. Cl.: G01C 21/26, G01C 21/36, G08B 21/06, H04M 1/60

(54) **KIT FOR ASSISTANCE AND MONITORING OF THE SERVICE OFFERED BY A VEHICLE DRIVER**
KIT ZUR UNTERSTÜTZUNG UND ÜBERWACHUNG DES VON EINEM FAHRZEUGFÜHRER ANGEBOTENEN DIENSTES
KIT D'ASSISTANCE ET DE SURVEILLANCE DU SERVICE FOURNI PAR UN CONDUCTEUR DE VÉHICULE

(30) Priority: 30.01.2020 IT 202000001786
(43) Date of publication of application: 04.08.2021
(73) Proprietor: NCC Italy Società Cooperativa, 00198 Roma (RM) (IT)
(72) Inventor: Cirulli, Luciano, 00163 Roma (RM) (IT)
(74) Representative: Fiammenghi, Eva

(56) References cited:
- WO-A2-2013/049248
- US-A1- 2008 208 446
- US-A1- 2017 153 636
- US-B2- 9 140 568

## Description

### Field of the invention

The present invention relates to the field of radio technologies. More specifically, the present patent application relates to a new driver assistance and monitoring kit provided with a Bluetooth earpiece and computerized controller, programmed to provide a communication network over various systematic levels.

### Prior art

A variety of devices and field radio communication systems are known in the prior art, using portable, vehicular, fixed and switching equipment, designed and used by specific organizations and not just by the general public. This is possible by following a digital communication standard for civil/professional communications such as that of cellular telephony. For example, there are portable radio devices that use systems that allow two simultaneous and independent communications on the same frequency.

There are also Push-To-Talk interoperable platforms that allow connection and therefore communication between mobile devices and private radio networks. For example, the "wave communicator" platform transforms a personal computer, a smartphone or a tablet into a push-to-talk device and allows immediate, safe and cost-effective communication with other users or groups of a private radio system. It is an application that can be used on any personal computer, smartphone or tablet. Moreover, said device allows extending communications outside one's own radio network, without territorial limits, through access to a data network and a device.

A further example of radio communication is the "Aladina radio" system which proposes the connection between private radio networks, cell phones, Wi-Fi networks and telephony, guaranteeing safe and effective communication.

The use of radio wave systems allows smartphones, radio transmitters, computers or any other communication device to instantly connect to each other via PTT. Said system allows connecting private radio systems and terrestrial mobile networks by removing the obstacles to interoperability. The "Aladina Radio" communicator is able to interconnect private radio networks with all mobile devices and personal computers to allow better organization and coordination of activities. Said devices always work through a physical interaction with the same, without, however, being provided with supports for facilitated communication for users assigned to carry out other operations while using said radios; in this way, giving an example, a driver would be constantly in a distraction condition to be able to use the device.

There does not seem to be any patent that effectively solves the aforementioned problems, therefore, the object of the present patent for industrial invention is to create a kit provided with a Bluetooth earpiece and fast and/or voice commands, as well as being connected to a series of additional radio devices, to allow users to communicate quickly through simple voice commands.

US 9 140 568 B2 describes a vehicle infotainment system with integrated navigation, safety, entertainment, and communication functionalities. US 2008/208446 A1 describes a GPS-based navigation device focused on efficiently locating and accessing emergency services.

### Description of the invention

According to the present invention, a new driving assistance and monitoring kit for the driver is produced, programmed to provide a communication network over three systematic levels:
- between a computerized monitoring controller and the drivers;
- between a computer controller and potential customers;
- between several drivers mutually.

The comprises includes a central radio device adapted to carry out radio communication with a plurality of additional devices installed in different vehicles and with a computerized controller adapted to operate as a control center for the various devices, monitoring their activities, sending calls and notifications on any type of information useful to the driver. Being provided with integrated GPS, the central device detects the traffic status in real time and calculates the route on which to direct the driver; moreover, it can perform various activities such as smart messaging, calls, automatic management of settings such as brightness and color.

This device is provided with further accessories such as:
- a Bluetooth earpiece, connected to said wireless central radio device; said Bluetooth earpiece being activatable by means of fast buttons or by means of voice commands;
- at least a microphone (40), integrated within said Bluetooth earpiece (20), adapted to send voice commands to said central radio device (10) and to allow the drivers to mutually communicate or communicate with said computerized controller (100);
- a plurality of fast buttons, designed to send inputs to touch-screen controls installed on said central radio device and programmed with short-cut paths intended to select the operations necessary for the driver through a single click so as to reduce the commitment of said driver and not disturb his/her concentration from driving;
- a twelve-volt battery charger adapted to recharge by connecting said central radio device to an outlet integrated within the vehicle.

The computerized controller, connected to a local network station, adapted to receive the requests processed by the central radio devices, by the users and vice versa to send requests and commands to the drivers.

The central radio device in a further version is provided with a pair of digital smart glasses adapted to be arranged in front of the driver's eyes, suitably configured for displaying road maps and text messages transmitted by the central device and to be quickly scrolled through.

The microphone is provided with an alcohol level detector adapted to detect the driver's sobriety state.

Said kit is provided with tools for monitoring driver fatigue by detecting working hours and kilometers traveled, once the limit has been reached whereby which the driver must stop working for the protection of the driver and customers.

Said kit is provided with a smoke presence detector in the air applied to the vehicle's steering wheel. The computerized controller is connected to at least a memory adapted to record and saving the calls made to ensure safety and monitor the regularity of activities.

Said central radio device, in a further version, is integrated directly into the dashboard of the vehicle in which it is installed and can, moreover, operate by means of rechargeable batteries.

Said kit is provided with wireless connection means adapted to connect it with latest generation cellular devices.

Finally, it can be connected to an application to be installed on common latest generation cellular devices adapted to allow customers to quickly interact with said computerized controller and send requests for services, reservations, send feedback on the activity of drivers or interact with additional users.

The advantages offered by the present invention are clear in the light of the above description and will be even clearer from the accompanying figures and the related detailed description.

### List of reference numerals

Central radio device 10
Screen 15
Bluetooth earpiece 20
Fast buttons 30
Microphone 40
Battery charger 50
Computerized controller 100
Memory 300
Requests from drivers to drivers 400
Requests from potential customers 500

### Description of the figures

The invention will hereinafter be described in at least a preferred embodiment thereof by way of non-limiting example with the aid of the accompanying figures, in which:

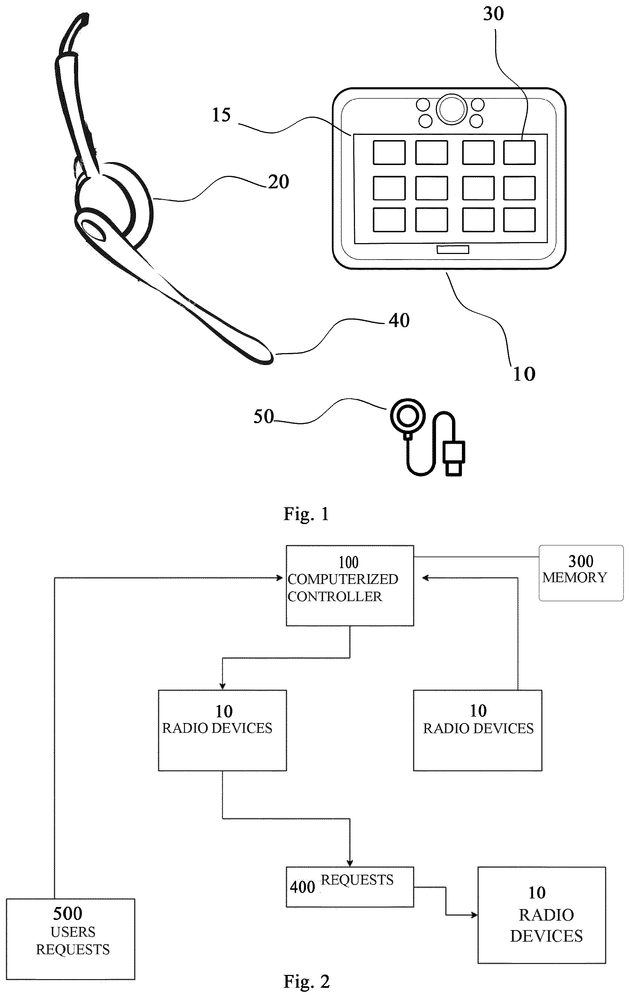

- FIGURE 1 shows the components of the kit provided with a central radio device 10, which can be installed autonomously or be directly integrated in a vehicle with driver, provided with fast buttons 30 that send inputs to touch-screen controls installed on said central radio device 10 and programmed with short-cut paths designed to select the operations necessary for the driver with a single click; a Bluetooth earpiece 20 connected to said central radio device 10 and provided with a microphone 40; a battery charger 50.
- FIGURE 2 shows a block diagram of the interrelationships between the components of the kit of the present invention, a central computerized controller 100, and potential users. Thanks to a computerized controller 100, the central radio devices 10 installed in the vehicles are constantly monitored, the calls constantly recorded and stored by means of a memory 300, connected to said computerized controller 100. A radio connection ensures the reception of the outgoing requests from a computerized controller 100 towards the central radio devices 10 of the drivers and the requests of the drivers towards the drivers 400 outgoing from a central radio device 10 and entering the central radio device 10 of a further driver the request is intended for; a Wi-Fi connection guarantees the requests of potential customers 500 towards the computerized controller 100.

### Detailed description of the invention

The present invention will now be described purely by way of non-limiting or binding example with the aid of the figures, which illustrate some embodiments relative to the present inventive concept.

With reference to FIG. 2 shows the levels of interaction of all the technological components that make driving assistance and driver monitoring possible as well as generating a communication network on three systematic levels:
- requests exiting from a computerized controller 100 towards the central radio devices 10 of the drivers;
- requests of the potential customers 500 towards the computerized controller 100;
- requests of the drivers towards other drivers 400 exiting from a central radio device 10 and entering into the central radio device 10 of a further driver the request is intended for;

With reference to FIG. 1, all the technological components of the kit are shown. A central radio device 10 capable of connecting via radio waves with a plurality of further radio devices 10, installed in different vehicles, and with a computerized controller 100 which operates as a control station for the various devices 10, monitors their activities and sends calls and notifications on all kinds of useful information for the driver. The aforementioned central radio device 10, provided with integrated GPS, can detect the traffic status in real time and calculate the most effective route on which to direct the driver.

Furthermore, the kit is capable of carrying out smart messaging, making calls and automatically managing settings such as brightness and color of the screen with which said central radio device 10 is provided.

A Bluetooth earpiece component 20, connected to said wireless central radio device 10, can be activated by means of fast buttons 30 or by means of voice commands.

A microphone 40, integrated within said Bluetooth earpiece 20, is adapted to send voice commands to said central radio device 10 and to allow the drivers to mutually communicate or communicate with said computerized controller 100.

The microphone 40 is provided with an alcohol level detector adapted to detect the driver's sobriety state. A plurality of fast buttons 30 which send inputs to touch-screen controls are installed on said central radio device 10 and programmed with short-cut paths intended to select the operations necessary for the driver through a single click on the screen 15 so as to reduce the activity of said driver and not disturb his/her concentration while driving.

A battery charger 50 adapted to recharge by connecting said central radio device 10 to an outlet integrated within the vehicle. The computerized controller 100, connected to a local network station, receives the requests processed by the central radio devices 10, by the users and vice versa it sends requests and commands to the drivers; moreover, the controller 100 is connected to at least a memory 300 adapted to record and save the calls made to ensure safety and monitor the regularity of the activities.

The aforementioned central radio device 10 is provided with digital smart glasses suitably configured for displaying road maps and text messages transmitted by the central device 10 which can be scrolled through quickly.

Said kit is provided with sensors for detecting driver fatigue by detecting working hours and kilometers traveled, once the limit has been reached whereby which the driver must stop working for the protection of the driver and customers.

Moreover, said kit is provided with a smoke presence detector in the air which may be applied to the vehicle's steering wheel.

Said central radio device 10, in a further version, is integrated directly into the dashboard of the vehicle in which it is installed and can operate by means of rechargeable batteries.

Said kit is provided with wireless connection adapted to connect it with latest generation cellular devices. Finally, said kit can be connected to a software application to be installed on common latest generation cellular devices adapted to allow customers to quickly interact with said computerized controller 100 and send requests feedback on the activity of drivers or interact with additional customers.

## Claims

1. Kit for driving assistance and for monitoring the driver adapted to provide a communication network over three systemic levels:
- requests exiting from a computerized controller (100) towards the central radio devices (10) of the drivers;
- the requests of the potential users (500) towards the computerized controller (100);
- the requests of the drivers towards the drivers (400) exiting from a central radio device (10) and entering the central radio device (10) of a further driver;
said kit comprising:
- a plurality of central radio devices (10), each installed in the vehicle of a driver, adapted to carry out the radio-communication with a plurality of further radio devices installed in different vehicles and with a computerized controller (100); each central radio device (10) being adapted to carry out smart messages and calls; each central radio device (10) being provided with:
• screen (15) for viewing messages and notifications and road maps, adapted to automatically manage the settings such as brightness and color;
• integrated GPS, adapted to detect the state of the traffic in real time and calculate the path on which the driver is directed;
- at least a Bluetooth earpiece (20), connected to said wireless central radio device (10); said Bluetooth earpiece (20) being activatable by means of fast buttons (30) or by means of voice commands;
- at least a microphone (40), integrated within said Bluetooth earpiece (20), adapted to send voice commands to said central radio device (10) and to allow the drivers to mutually communicate or communicate with said computerized controller (100); said microphone (40) being provided with an alcohol level detector adapted to detect the state of sobriety of the driver;
- said fast buttons (30), installed on said central radio device (10), adapted to send inputs by means of touch-screen and programmed with short-cut paths intended to select the operations necessary for the driver through a single click, for example: operation of activating the navigator with traffic detection, operations of aid request in case of accident or in case of any other obstacle that prevents the vehicle from continuing onward; said command being adapted to send an assistance/rescue call to said computerized controller (100) which sends a replacement vehicle;
- a battery charger (50) adapted to recharge the battery integrated in said central radio device (10), by connecting said central radio device (10) to an outlet integrated within the vehicle;
said device (10) being constantly connected with said computerized controller (100), adapted to operate as a control station for the different devices (10), monitoring the activities thereof, sending calls and information on any type of information useful for the driver, also being connected to a local network station that is adapted to receive the requests processed by the central radio devices (10), from the clients and vice versa to send requests and commands to the drivers;
wherein said central radio device (10) is provided with a pair of smart digital glasses adapted to be arranged in front of the eyes of the driver, suitably configured for displaying road maps and text messages transmitted by the central device that can be quickly skimmed/scrolled through.

2. Kit for driving assistance and for monitoring the driver, according to the preceding claim 1, **characterized in that** said kit is provided with an assembly of sensors adapted to monitor the fatigue of the driver through the detection of the steering wheel movements, or through suitable video cameras which film the eyes, and if said sensors detect a drop of attention, a warning light turns on in the instrument panel and, simultaneously, an alarm sounds in the driver compartment.

3. Kit for driving assistance and for monitoring the driver, according to any one of the preceding claims 1 or 2, **characterized in that** said kit is provided with a smoke presence detector for detecting smoke in the air, such detector applied on the steering wheel of the vehicle.

4. Kit for driving assistance and for monitoring the driver, according to any one of the preceding claims, **characterized in that** said computerized control unit (100) is connected to at least one memory (300) adapted to record and save the calls made in order to ensure safety and monitor the regularity of the activities.

5. Kit for driving assistance and for monitoring the driver, according to any one of the preceding claims, **characterized in that** said central radio device (10) is integrated directly in the dashboard of the vehicle in which it is installed.

6. Kit for driving assistance and for monitoring the driver, according to any one of the preceding claims, **characterized in that** said central radio device (10) operates by means of rechargeable batteries.

7. Kit for driving assistance and for monitoring the driver, according to any one of the preceding claims, **characterized in that** said Kit is provided with wireless connection adapted to connect said Kit with latest generation cellular devices.

8. Kit for driving assistance and for monitoring the driver, according to any one of the preceding claims, **characterized in that** said Kit is connected to an application to be installed on common latest generation cellular devices adapted to allow the users to quickly integrate with said computerized controller (100), to send requests, to send feedback regarding the activity of the drivers or to interact with further users.

## Patentansprüche

1. Kit zur Fahrunterstützung und zur Überwachung des Fahrers, das dazu ausgelegt ist, ein Kommunikationsnetzwerk über drei Systemebenen bereitzustellen:
- Anfragen, die von einem computerisierten Controller (100) an die zentralen Funkeinrichtungen (10) der Fahrer gesendet werden;
- die Anfragen der potenziellen Nutzer (500) an den computerisierten Controller (100);
- die Anfragen der Fahrer an die Fahrer (400), die von einer zentralen Funkeinrichtung (10) ausgehen und in die zentrale Funkeinrichtung (10) eines weiteren Fahrers eintreten;
wobei das Kit aufweist:
- mehre zentrale Funkeinrichtungen (10), die jeweils in dem Fahrzeug eines Fahrers installiert sind und dazu ausgelegt sind, die Funkkommunikation mit mehreren weiteren Funkeinrichtungen, die in verschiedenen Fahrzeugen installiert sind, und mit einem computerisierten Controller (100) durchzuführen; wobei jede zentrale Funkeinrichtung (10) dazu ausgelegt ist, intelligente Nachrichten und Anrufe durchzuführen; wobei jede zentrale Funkeinrichtung (10) versehen ist mit:
• einem Bildschirm (15) zum Anzeigen von Mitteilungen und Benachrichtigungen sowie Straßenkarten, der dazu ausgelegt ist, die Einstellungen wie Helligkeit und Farbe automatisch zu verwalten;
• einem integrierten GPS, das dazu ausgelegt ist, den Verkehrsstatus in Echtzeit zu erfassen und die Route, auf die der Fahrer geleitet wird, zu berechnen;
- zumindest ein Bluetooth-Ohrstück (20), das mit der drahtlosen zentralen Funkeinrichtung (10) verbunden ist; wobei das Bluetooth-Ohrstück (20) mittels Schnellwahltasten (30) oder mittels Sprachbefehlen aktivierbar ist;
- zumindest ein Mikrofon (40), das in das Bluetooth-Ohrstück (20) integriert ist und dazu ausgelegt ist, Sprachbefehle an die zentrale Funkeinrichtung (10) zu senden und es den Fahrern zu ermöglichen, gegenseitig zu kommunizieren oder mit dem computerisierten Controller (100) zu kommunizieren; wobei das Mikrofon (40) mit einem Alkoholpegeldetektor versehen ist, der dazu ausgelegt ist, den Zustand der Nüchternheit des Fahrers zu erfassen;
- wobei die Schnellwahltasten (30), die an der zentralen Funkeinrichtung (10) installiert sind, dazu ausgelegt sind, Eingaben mittels eines Touchscreens zu senden, und mit Kurzbefehlen programmiert sind, die dazu gedacht sind, die für den Fahrer erforderlichen Vorgänge durch einen einzigen Klick auszuwählen, zum Beispiel: den Vorgang des Aktivierens des Navigators mit Verkehrserkennung, der Vorgänge des Hilferufs im Fall eines Unfalls oder im Fall eines anderen Hindernisses, das das Fahrzeug daran hindert, weitezufahren; wobei der Befehl dazu ausgelegt ist, einen Unterstützungs-/Rettungsanruf an den computerisierten Controller (100) zu senden, der ein Ersatzfahrzeug schickt;
- einen Batterielader (50), der dazu ausgelegt ist, die in der zentralen Funkeinrichtung (10) integrierte Batterie zu laden, indem die zentrale Funkeinrichtung (10) an eine in dem Fahrzeug integrierte Steckdose angeschlossen wird;
wobei die Einrichtung (10) ständig mit dem computerisierten Controller (100) verbunden ist, dazu ausgebildet ist, die als Steuerstation für die verschiedenen Einrichtungen (10) zu arbeiten, deren Aktivitäten überwacht, Anrufe und Informationen jeglicher Art von Informationen, die für den Fahrer nützlich sind, sendet und außerdem mit einer lokalen Netzwerkstation, die dazu ausgelegt ist, die durch die zentralen Funkeinrichtungen (10) verarbeiteten Anfragen von den Kunden zu empfangen und umgekehrt Anfragen und Befehle an die Fahrer zu senden, verbunden ist;
wobei die zentrale Funkeinrichtung (10) mit einer intelligenten Digitalbrille ausgestattet ist, die dazu ausgelegt ist, vor den Augen des Fahrers angeordnet zu werden und geeignet dazu ausgebildet ist, Straßenkarten und Textmitteilungen, die durch die zentrale Einrichtung übertragen werden und schnell überflogen/durchgeblättert werden können, anzuzeigen.

2. Kit zur Fahrunterstützung und zur Überwachung des Fahrers gemäß dem vorangehenden Anspruch 1, **dadurch gekennzeichnet, dass** das Kit mit einer Anordnung von Sensoren versehen ist, die dazu ausgelegt sind, die Müdigkeit des Fahrers durch Erfassung der Lenkradbewegungen oder durch geeignete Videokameras, die die Augen filmen, zu überwachen, und wenn die Sensoren einen Aufmerksamkeitsverlust feststellen, eine Warnleuchte im Armaturenbrett aufleuchtet und gleichzeitig ein Alarm im Fahrerraum ertönt.

3. Kit zur Fahrunterstützung und zur Überwachung des Fahrers gemäß einem der vorangehenden Ansprüche 1 oder 2, **dadurch gekennzeichnet, dass** das Kit mit einem Rauchmelder zum Erkennen von Rauch in der Luft versehen ist, wobei dieser Melder am Lenkrad des Fahrzeugs angebracht ist.

4. Kit zur Fahrunterstützung und zur Überwachung des Fahrers gemäß einem der vorangehenden Ansprüche, **dadurch gekennzeichnet, dass** die computerisierte Steuereinheit (100) mit zumindest einem Speicher (300) verbunden ist, der dazu ausgelegt ist, die Anrufe, die getätigt werden, um die Sicherheit zu gewährleisten und die Richtigkeit der Aktivitäten zu überwachen, aufzuzeichnen und zu speichern.

5. Kit zur Fahrunterstützung und zur Überwachung des Fahrers gemäß einem der vorangehenden Ansprüche, **dadurch gekennzeichnet, dass** die zentrale Funkeinrichtung (10) direkt in das Armaturenbrett des Fahrzeugs, in dem sie installiert ist, integriert ist.

6. Kit zur Fahrunterstützung und zur Überwachung des Fahrers gemäß einem der vorangehenden Ansprüche, **dadurch gekennzeichnet, dass** die zentrale Funkeinrichtung (10) mittels wiederaufladbarer Batterien arbeitet.

7. Kit zur Fahrunterstützung und zur Überwachung des Fahrers gemäß einem der vorangehenden Ansprüche, **dadurch gekennzeichnet, dass** das Kit mit einer drahtlosen Verbindung ausgestattet ist, die dazu ausgelegt ist, das Kit mit Mobilfunkeinrichtungen der neuesten Generation zu verbinden.

8. Kit zur Fahrunterstützung und zur Überwachung des Fahrers gemäß einem der vorangehenden Ansprüche, **dadurch gekennzeichnet, dass** das Kit mit einer Anwendung verbunden ist, die auf gängigen Mobilfunkeinrichtungen der neuesten Generation installiert werden kann und dazu ausgelegt ist, es den Nutzern zu ermöglichen, sich schnell mit dem computerisierten Controller (100) zu verbinden, Anfragen zu senden, Rückmeldungen in Bezug auf die Aktivität der Fahrer zu senden oder mit weiteren Nutzern zu interagieren.

## Revendications

1. Kit d'aide à la conduite et de surveillance du conducteur conçu pour fournir un réseau de communication sur trois niveaux systémiques :
- des demandes émanant d'un dispositif de commande informatisé (100) vers les dispositifs radio centraux (10) des conducteurs ;
- les demandes des utilisateurs potentiels (500) vers le dispositif de commande informatisé (100) ;
- les demandes des conducteurs vers les conducteurs (400) émanant d'un dispositif radio central (10) et entrant dans le dispositif radio central (10) d'un autre conducteur ;
ledit kit comprenant :
- une pluralité de dispositifs radio centraux (10), chacun installé dans le véhicule d'un conducteur, conçus pour réaliser la communication radio avec une pluralité d'autres dispositifs radio installés dans différents véhicules et avec un dispositif de commande informatisé (100) ; chaque dispositif radio central (10) étant conçu pour transmettre des messages et des appels intelligents ; chaque dispositif radio central (10) étant muni des éléments suivants :
• un écran (15) pour visualiser des messages et des notifications et des cartes routières, conçu pour gérer automatiquement les réglages tels que la luminosité et la couleur ;
• un GPS intégré, conçu pour détecter l'état du trafic en temps réel et calculer la route sur laquelle est dirigé le conducteur ;
- au moins un écouteur Bluetooth (20), connecté audit dispositif radio central sans fil (10) ; ledit écouteur Bluetooth (20) étant activable au moyen de boutons d'action rapide (30) ou au moyen de commandes vocales ;
- au moins un microphone (40), intégré au sein dudit écouteur Bluetooth (20), conçu pour envoyer des commandes vocales audit dispositif radio central (10) et pour permettre aux conducteurs de communiquer mutuellement ou de communiquer avec ledit dispositif de commande informatisé (100) ; ledit microphone (40) étant muni d'un détecteur de niveau d'alcool conçu pour détecter l'état de sobriété du conducteur ;
- lesdits boutons d'action rapide (30), installés sur ledit dispositif radio central (10), conçus pour envoyer des entrées au moyen d'un écran tactile et programmés avec des chemins de raccourci destinés à sélectionner les opérations nécessaires au conducteur en un clic, par exemple : une opération d'activation du navigateur avec détection de trafic, des opérations de demande d'assistance en cas d'accident ou en cas de tout autre obstacle empêchant le véhicule d'aller plus loin ; ladite commande étant conçue pour envoyer un appel d'assistance/de secours audit dispositif de commande informatisé (100) qui envoie un véhicule de remplacement ;
- un chargeur de batterie (50) conçu pour recharger la batterie intégrée dans ledit dispositif radio central (10), en connectant ledit dispositif radio central (10) à une prise intégrée à l'intérieur du véhicule ;
ledit dispositif (10) étant connecté en permanence audit dispositif de commande informatisé (100), conçu pour fonctionner en tant que station de commande des différents dispositifs (10), surveillant les activités de celui-ci, envoyant des appels et des informations sur tout type d'information utile au conducteur, étant également connecté à une station de réseau local qui est conçue pour recevoir les demandes traitées par les dispositifs radio centraux (10), des clients et inversement pour envoyer des demandes et des instructions aux conducteurs ;
dans lequel ledit dispositif radio central (10) est muni d'une paire de lunettes numériques intelligentes conçues pour être agencées devant les yeux du conducteur, configurées de manière appropriée pour afficher des cartes routières et des messages texte transmis par le dispositif central qu'il est possible de parcourir/faire défiler rapidement.

2. Kit d'aide à la conduite et de surveillance du conducteur, selon la revendication 1 précédente, **carac**t**érisé en ce** que ledit kit est muni d'un ensemble de capteurs conçus pour surveiller la fatigue du conducteur par la détection des mouvements de volant, ou par des caméras vidéo appropriées qui filment les yeux, et si lesdits capteurs détectent une baisse d'attention, un voyant d'alerte s'allume sur le tableau de bord et une alarme retentit simultanément dans l'espace conducteur.

3. Kit d'aide à la conduite et de surveillance du conducteur, selon l'une des revendications 1 ou 2 précédentes, **caractérisé en ce que** ledit kit est muni d'un détecteur de présence de fumée pour détecter de la fumée dans l'air, un tel détecteur étant appliqué sur le volant du véhicule.

4. Kit d'aide à la conduite et de surveillance du conducteur, selon l'une des revendications précédentes, **caractérisé en ce que** ladite unité de commande informatisée (100) est connectée à au moins une mémoire (300) conçue pour enregistrer et sauvegarder les appels effectués afin d'assurer la sécurité et de surveiller la régularité des activités.

5. Kit d'aide à la conduite et de surveillance du conducteur, selon l'une des revendications précédentes, **caractérisé en ce que** ledit dispositif radio central (10) est intégré directement dans le tableau de bord du véhicule dans lequel il est installé.

6. Kit d'aide à la conduite et de surveillance du conducteur, selon l'une des revendications précédentes, **caractérisé en ce que** ledit dispositif radio central (10) fonctionne au moyen de batteries rechargeables.

7. Kit d'aide à la conduite et de surveillance du conducteur, selon l'une des revendications précédentes, **caractérisé en ce que** ledit Kit est muni d'une connexion sans fil conçue pour connecter ledit Kit à des dispositifs cellulaires de dernière génération.

8. Kit d'aide à la conduite et de surveillance du conducteur, selon l'une des revendications précédentes, **caractérisé en ce que** ledit Kit est connecté à une application à installer sur des dispositifs cellulaires courants de dernière génération conçus pour permettre aux utilisateurs d'intégrer rapidement ledit dispositif de commande informatisé (100), d'envoyer des demandes, d'envoyer un retour d'information concernant l'activité des conducteurs ou d'interagir avec d'autres utilisateurs.
